# EUROPEAN PATENT SPECIFICATION

(11) **EP 0 420 198 B1**
(45) Date of publication and mention of the grant of the patent: **17.04.1996**
(21) Application number: 90118484.6
(22) Date of filing: 26.09.1990
(51) Int. Cl.: H04N 1/047, H04N 1/10

(54) **Beam scanning apparatus and apparatus for writing image information**
Strahlabtastvorrichtung und Bildinformationsschreibvorrichtung
Appareil d'analyse à faisceau et appareil pour écrire de l'information d'images

(30) Priority: 27.09.1989 JP 251281/89
(43) Date of publication of application: 03.04.1991
(73) Proprietor: CANON KABUSHIKI KAISHA, Tokyo (JP)
(72) Inventor: Nishiberi, Nozomu, c/o Canon Kabushiki Kaisha, Ohta-ku, Tokyo (JP)
(74) Representative: Tiedtke, Harro, Dipl.-Ing.

(56) References cited:
- AU-A- 551 136
- DE-A- 3 722 085
- US-A- 4 829 339
- PATENT ABSTRACTS OF JAPAN vol. 13, no. 322 (P-902)(3670) 20 July 1989 & JP-A- 1 090 417

## Description

### BACKGROUND OF THE INVENTION

The present invention relates to a beam scanning apparatus, more specifically, to a laser beam scanning apparatus in which, for example, a scanning surface arranged with elements for recording image is scanned with light beam emitted from a laser and information for the applied position of the laser beam on the scanning surface is precisely detected when recording image information, and thereby realizing the scanning on the scanning surface with high precision.

Heretofore, there have been proposed various laser scanning apparatus in which laser beam is deflected by galvanometer or the like so as to be directed to a scanning surface on which elements for image recording are arranged, and image information such as characters or pictures, etc is recorded. This type of the apparatus is widely used for such apparatuses as a liquid crystal display, a laser marker and a laser trimmer that can write image information on the liquid crystal, metal plate or the like.

DE-A-37 22 085 discloses a beam scanning apparatus comprising optical deflecting means for deflecting a light beam so as to guide it to a predetermined surface and scanning means for changing at least one of a deflecting angle and a deflecting position of said optical deflecting means so that the light beam is two-dimensionally scanned on said predetermined surface.

From US-A-4 829 339 is known a photographic system for accurately reproducing encoded information onto a recording medium. This system includes an image/light source, a feedback sensor, a lens assembly, a controller, a recording medium assembly and a reading sensor, whereby encoded information is decomposed into sections, adjusted, and transmitted such that the sections is correctly aligned and smoothly joint into a final reproduced image.

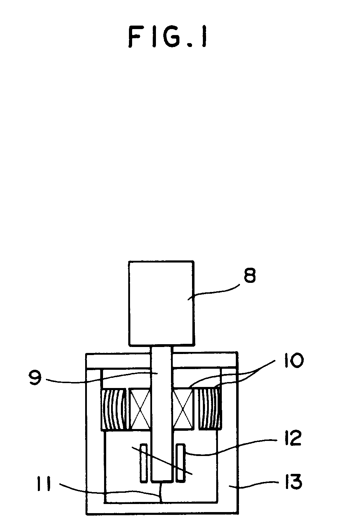

Figure 1 schematically shows the main components of a galvanometer used as a deflector in conventional laser beam scanners to control the deflection of a laser beam.

In Figure 1, the reference numeral 8 indicates a mirror fixed to a rotation shaft 9. An electric motor 10 rotates the shaft 9 at a constant speed. A spring 11, used to cause a rotating force in the reverse direction to the rotational direction of the shaft 9, is attached at one end to the shaft 9 and at the other end to the case 13.

A capacitance sensor 12, attached to the shaft 9 at its part to obtain information for the rotation of the shaft 9, detects the rotational angle of the shaft.

In Figure 1, light beam incident on the mirror 8 from a laser (not shown) is deflected by oscillating the mirror 8 so as to scan the scanning surface. At this time, the rotation angle of the mirror is detected by the capacitance sensor 12 so as to control to drive the rotating state of the electric motor 10, and thus control the scanning state of the scanning surface.

In the conventional laser scanner shown in Figure 1, however, there are arisen following problems if scanning is attempted by rapid deflection of the laser beam.
(a) Rapid acceleration or deceleration causes a distortion of the rotation shaft. As a result, there would be occurred a error between the rotation angle of the mirror and the rotation angle to be detected by the capacitance. Accordingly, it is hard to obtain accurate positional information of the applied position of the laser beam on the scanning surface.
(b) If an attempt is made to lessen the moment of inertia of the rotating parts so as to improve the response characteristic, limitation will have to be imposed when attaching the capacitance sensor.

### SUMMARY OF THE INVENTION

In view of the above drawbacks in the conventional apparatus, an object of the present invention is to provide a light beam scanning apparatus capable of more accurately controlling the state of the applied position of light beam on a scanning surface and to an image information writing apparatus employing such the scanning apparatus.

This object is achieved by a beam scanning apparatus having the features of claim 1. The invention is further developed by the features mentioned in the subclaims.

### BRIEF DESCRIPTION OF THE DRAWINGS

Figure 1 is a schematic diagram of a conventional optical deflector.

Figure 2 is a schematic diagram illustrating main parts of an image information writing apparatus according to the first embodiment of the present invention.

Figure 3 is a schematic diagram illustrating main parts of an image information writing apparatus according to the second embodiment of the present invention.

### DETAILED DESCRIPTION OF THE PREFERRED EMBODIMENTS

A laser scanning apparatus explained below as an example of the present invention functions as follows. In a laser scanning apparatus, light beam from a light source is reflected by at least one beam deflecting means and is directed to a scanning surface. And a beam splitter is placed between the beam deflecting means and the scanning surface, in the scanning, and by the beam splitter a part of the light beam from the beam deflecting means is perpendicularly splitted to an optical path from the deflecting means when the deflecting means is in the reference state. One of these beams is guided to an optical detection means to control the deflecting angle of the deflecting means by control means by the use of the output from the optical detection means.

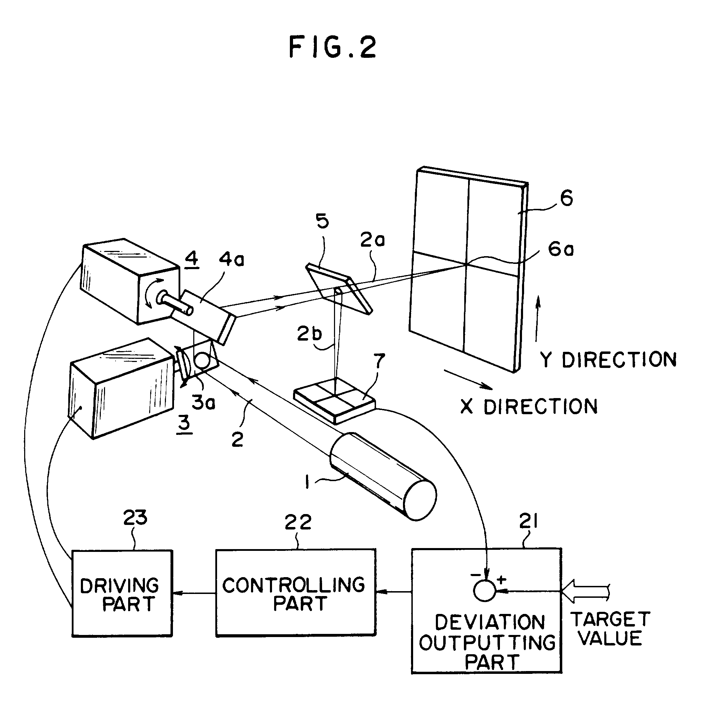

Figure 2 outlines the main components of one embodiment according to the present invention.

In this figure, the reference numeral 1 denotes a laser oscillator and the numeral 2 represents the laser beam. A x-axis beam scanning mechanism 3 can be driven by an electric motor (such as a servo motor or galvanometer) with a plane mirror 3a fixed at one end. By oscillating or rotating this mirror 3a (in this embodiment by rotating the mirror around its supporting shaft), laser beam 2 is reflected and deflected to scan on a scanning surface 6 described later in the X direction. A Y-axis beam scanning mechanism 4 can be driven by an electric motor (such as a servo motor or galvanometer in this embodiment) as a driving means with a plane mirror 4a fixed at one end. By oscillating or rotating this mirror 4a (by rotating the mirror 4a around its supporting shaft in this embodiment), the laser beam 2 deflected by the Y-axis beam scanning mechanism 4 is reflected and deflected to scan on the scanning surface 6 described later in the Y direction.

The reference numeral 5 denotes a beam splitter comprising a half-mirror. It splits the laser beam deflected by the mirror 4a of the Y-axis optical scanning mechanism 4 into two beams, the transmitted beam 2a and the reflected beam 2b. The scanning surface 6 is the object scanned by laser beam 2a to write image information thereon. This embodiment employs a high-polymer liquid crystal capable of thermally writing. An optical detecting means 7 comprising a two-dimensional CCD area sensor detects information of applied position of the laser beam 2b reflected by the beam splitter 5. Thus, the information of applied position of the laser beam on the object can be obtained by detecting the light beam from the mirrors 3a and 4a, so that more accurate control for the applied position is realized.

In the present embodiment, the beam splitter 5 is set so that laser beam 2b is split perpendicularly to the optical path of laser beam 2a coming from the mirror 4a when the mirror surface 3a of the X-axis beam scanning mechanism 3 and the mirror surface 4a of the Y-axis beam scanning mechanism 4 are in the standard state (for example, when the point of incidence of laser beam 2 is set at the center 6a of the scanning surface 6). In other words, when the two split laser beams, 2a and 2b, are in the standard state, they are set to be perpendicular each other.

Further, the scanning distance of laser beam 2a on the scanning surface 6 and the scanning distance of laser beam 2b on the surface of the optical detecting means 7 are set so as to have similar relationship. In other words, if the optical detecting means 7 is placed in an equivalent position on the transmission beam path from the beam splitter 5, the light receiving surface of the optical detecting means 7 would be parallel to the scanning surface 6 (or the incident angle of the scanning light beam on the light receiving surface of the detecting means is always same as that on the scanning surface 6). The scanning beam is thus detected actually, so that bath an error and information for the optical scanning mechanism to be controlled can be found by just one area sensor.

A deviation outputting part 21 calculates the deviation between the signal output from the optical detecting means 7 and the target value signal input from the outside, and sends this deviation signal to a controlling part 22. The controlling part 22 causes a driving part 23 to be driven on the basis of the signal from the deviation outputting part 21. Based on the signal from the controlling part 22, the driving part 23 adjusts the rotations of the mirror 3a of the X-axis optical scanning mechanism 3 and the mirror 4b of the Y-axis optical scanning mechanism 4, and controls the applied position of the laser beam 2a on the scanning surface 6.

In the above configuration of this embodiment, the laser beam oscillated from the oscillator 1 is reflected and deflected by the mirror 3a of the X-axis beam scanning mechanism 3 and the mirror 4a of the Y-axis beam scanning mechanism 4, and is scanned on both the scanning surface 6 and the surface of the beam detecting means 7 through the beam splitter 5.

The positional relationship between the scanning surface 6 and the surface of the beam detecting means 7 is established beforehand. Hence, by detection of the point of incidence of the laser beam 2b on the surface of the beam detecting means 7, the applied position (scanning position) of laser beam 2a on the scanning surface 6 can be obtained with high accuracy. Then, the deviation between the signal output from the beam detecting means 7 and the target value signal input from the outside is obtained by the deviation outputting part 21 which sends the deviation signal to the controlling part 22.

Then, the controlling part 22 controls the driving part 23 in compliance with the deviation signal from the deviation outputting part 21. From this, the driving part 23 causes the X-axis beam scanning mechanism 3 and the Y-axis beam scanning mechanism 4 to be driven, and thereby controlling the applied position of laser beam 2a on the scanning surface 6.

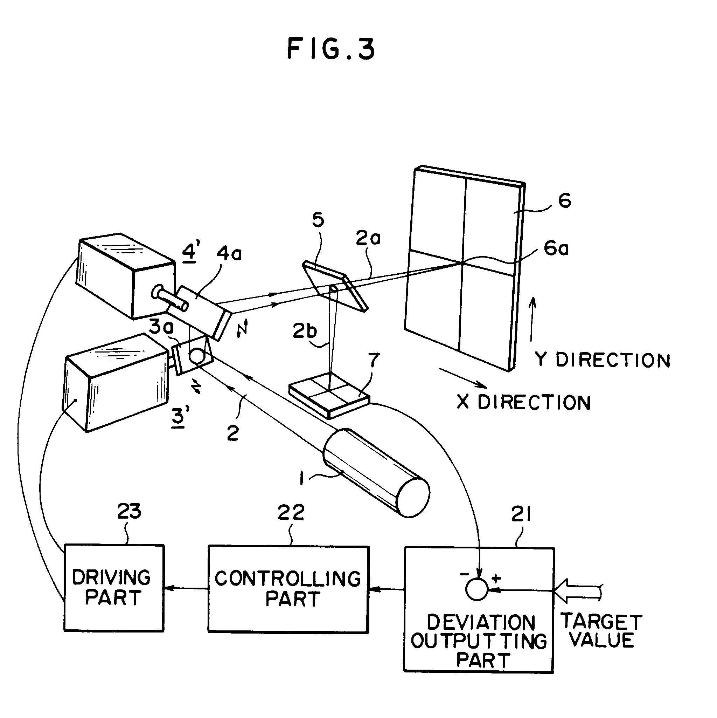

In the present embodiment, instead of using an electrical motor to make the X-axis and Y-axis beam scanning mechanisms rotate the mirrors, another drive means can be used, such as a piezo-electric element. Such embodiment is illustrated in Figure 3. The numbering of the parts in Figure 3 is the same as for Figure 2. The numerals 3′ and 4′ indicate scanning mechanisms for the X-axis and Y-axis scanning mechanisms, respectively. Each scanning mechanism contains a piezo-electric element. These can make mirrors 3a and 4a oscillate without changing the angles of the reflective surfaces. The X-axis beam scanning mechanism 3a oscillates in the X-axis direction, and the Y-axis beam scanning mechanism 4a oscillate in the Y-axis direction. By oscillating the mirrors 3a and 4a to change the deflection (reflection) positions due to the mirrors, the scanning surface 6 can be entirely scanned just as in the previous embodiment. The driving part 23 is set to send a control voltage to the piezo-electric elements of respective beam scanning mechanisms, thus achieving the same control as in the previous embodiment.

Another way to deflect the laser beam may be by using the path of a guided wave, for example.

The above embodiment illustrate a case where the scanning surface is two-dimensionally scanned. But, this invention can also be applied as a laser beam scanning apparatus in which only one optical deflector is used to one-dimensionally scan the scanning surface.

Further, the results obtained in the above embodiments are exactly the same when the scanning surface and the beam detecting means are arranged in reverse.

According to the embodiments described above, the respective element is set as illustrated above to obtain the information of the applied position of laser beam on the scanning surface, so that the information of the applied position of the laser beam can be accurately obtained without suffering from the influences from distortion of the rotating shaft during high-speed rotation of the optical deflector. Further, there is no need for providing a sensor to detect the rotation angle on the optical deflector. Also, the moment of inertia of the rotating portion can be decreased, and the deflection response is improved. In addition, because the signal output from the beam detecting means is proportional to the change in scanned distance for the object such as the scanning surface, the output signal does not have to be compensated.

## Claims

1. A beam scanning apparatus comprising:
a) optical deflecting means (3a, 4a) for deflecting a light beam (2) so as to guide it to a predetermined surface (6),
b) scanning means (3, 4) for changing at least one of a deflecting angle and a deflecting position of said optical deflecting means (3a, 4a) so that the light beam (2) is two-dimensionally scanned on said predetermined surface (6),
**characterized by**
c) detecting means (5, 7) for detecting a two-dimensional scanning condition of the light beam (2) on said predetermined surface (6) by receiving the light beam (2) from said optical deflecting means (3a, 4a), and
d) controlling means (21, 22, 23) for correcting at least one of said deflection angle and said deflection position of said optical deflecting means (3a, 4a) on the basis of a detection result of said detecting means (5, 7).

2. An apparatus according to claim 1, wherein said scanning means (3, 4) changes the deflection angle of said optical deflecting means (3a, 4a).

3. An apparatus according to claim 2, wherein said detecting means (5, 7) includes a beam splitter (5) disposed in the optical path between said optical deflecting means (3a, 4a) and said predetermined surface (6), and an optical detector (7) for detecting the beam (2b) split by said beam splitter (5) from the beam (2a) directed to said predetermined surface.

4. An apparatus according to claim 3, wherein said optical detector (7) detects an incident position of the beam (2b) split by said beam splitter (5), and said controlling means (21, 22, 23) controls the change in said angle of deflection based on said detected incident position.

5. An apparatus according to claim 4, wherein said optical detector (7) has a CCD area sensor.

6. An apparatus according to claim 2, wherein said optical deflecting means (3a, 4a) has a first mirror (3a) and a second mirror (4a).

7. An apparatus according to claim 6, wherein said scanning means (3, 4) includes a first driving means (3) for rotating said first mirror (3a), and a second driving means (4) for rotating said second mirror (4a).

8. An apparatus according to claim 7, wherein the light beam (2) is scanned in a first direction on said predetermined surface (6) by said first mirror (3a) being driven by said first driving means (3) and the light beam (2) is scanned in a second direction on said predetermined surface (6) by said second mirror (4a) being driven by said second driving means (4).

9. An apparatus according to one of the preceding claims used in an image information writing apparatus, wherein said optical deflecting means (3a, 4a) guides a light beam (2) to a surface of an object to be scanned for writing image information thereon.

10. An apparatus according to one of the preceding claims, wherein said predetermined surface (6) consists of a high-polymer liquid crystal for writing image information thereon.

11. An apparatus according to claim 6, wherein each of said first and said second mirrors (3a, 4a) are plane mirrors.

## Patentansprüche

1. Strahl-Abtastvorrichtung mit:
a) optischen Ablenkeinrichtungen (3a, 4a) zum Ablenken eines Lichtstrahls (2), so daß er zu einer vorbestimmten Oberfläche (6) geführt wird,
b) Abtasteinrichtungen (3, 4), um den Ablenkwinkel und/oder die Ablenkposition der optischen Ablenkeinrichtung (3a, 4a) so zu verändern, daß der Lichtstrahl (2) zweidimensional auf der vorbestimmten Oberfläche (6) abgetastet wird,
**gekennzeichnet durch**
c) Nachweiseinrichtungen (5, 7), um eine zweidimensionale Abtastbedingung des Lichtstrahls (2) auf der vorbestimmten Oberfläche (6) durch Empfangen des Lichtstrahls (2) von der optischen Ablenkeinrichtung (3a, 4a) nachzuweisen, und
d) Steuereinrichtungen (21, 22, 23), um den Ablenkwinkel und/oder die Ablenkposition der optischen Ablenkeinrichtung (3a, 4a) auf der Grundlage eines Nachweisergebnisses der Nachweiseinrichtung (5, 7) zu korrigieren.

2. Vorrichtung nach Anspruch 1, wobei die Abtasteinrichtung (3, 4) den Ablenkwinkel der optischen Ablenkeinrichtung (3a, 4a) ändert.

3. Vorrichtung nach Anspruch 2, wobei die Nachweiseinrichtung (5, 7) einen Strahlteiler (5), der in dem optischen Weg zwischen der optischen Ablenkeinrichtung (3a, 4a) und der vorbestimmten Oberfläche (6) angeordnet ist, und einen optischen Detektor (7) zum Nachweisen des Strahls (2b), der durch den Strahlteiler (5) von dem auf die vorbestimmte Oberfläche gerichteten Strahl (2a) geteilt ist, enthält.

4. Vorrichtung nach Anspruch 3, wobei der optische Detektor (7) eine Einfallsposition des Strahls (2b), der durch den Strahlteiler (5) geteilt ist, nachweist und die Steuereinrichtung (21, 22, 23) die Veränderung des Ablenkwinkels auf der Grundlage der nachgewiesenen Einfallsposition steuert.

5. Vorrichtung nach Anspruch 4, wobei der optische Detektor (7) einen CCD-Flächensensor hat.

6. Vorrichtung nach Anspruch 2, wobei die optische Ablenkeinrichtung (3a, 4a) einen ersten Spiegel (3a) und einen zweiten Spiegel (4a) hat.

7. Vorrichtung nach Anspruch 6, wobei die Abtasteinrichtung (3, 4) eine erste Antriebseinrichtung (3) zum Drehen des ersten Spiegels (3a) und eine zweite Antriebseinrichtung (4) zum Drehen des zweiten Spiegels (4a) umfaßt.

8. Vorrichtung nach Anspruch 7, wobei der Lichtstrahl (2) in einer ersten Richtung auf der vorbestimmten Oberfläche (6) abgetastet wird, indem der erste Spiegel (3a) durch die erste Antriebseinrichtung (3) betrieben wird, und der Lichtstrahl (2) in einer zweiten Richtung auf der vorbestimmten Oberfläche (6) abgetastet wird, indem der zweite Spiegel (4a) durch die zweite Antriebseinrichtung (4) betrieben wird.

9. Vorrichtung nach einem der vorhergehenden Ansprüche, die in einer Vorrichtung zum Schreiben von Bildinformation verwendet wird, wobei die optische Ablenkeinrichtung (3a, 4a) einen Lichtstrahl (2) zu einer Objektoberfläche führt, die zum Schreiben von Bildinformation auf die Objektoberfläche abzutasten ist.

10. Vorrichtung nach einem der vorhergehenden Ansprüche, wobei die vorbestimmte Oberfläche (6) aus einem hochpolymeren Flüssigkristall zum Schreiben von Bildinformation auf die Oberfläche besteht.

11. Vorrichtung nach Anspruch 6, wobei sowohl der erste als auch der zweite Spiegel (3a, 4a) ebene Spiegel sind.

## Revendications

1. Appareil de balayage à faisceau comprenant:
a) des moyens de déviation optiques (3a, 4a) pour dévier un faisceau lumineux (2), de manière à le guider vers une surface (6) prédéterminée,
b) des moyens de balayage (3, 4) pour modifier au moins l'un d'un angle de déviation et d'une position de déviation desdits moyens de déviation optique (3a, 4a), de manière que le faisceau lumineux (2) soit en deux dimensions sur ladite surface (6) prédéterminée
caractérisé par
c) des moyens de détection (5, 7) pour détecter un état de balayage en deux dimensions du faisceau lumineux (2) sur ladite surface (6) prédéterminée, à la réception du faisceau lumineux (2) à partir desdits moyens de déviation optiques (3a, 4a), et
d) des moyens de commande (21, 22, 23) pour corriger au moins l'un dudit angle de déviation et de ladite position de déviation desdits moyens de déviation optiques (3a, 4a), sur la base d'un résultat de détection desdits moyens de détection (5, 7).

2. Appareil selon la revendication 1, dans lequel ledit moyen de balayage (3, 4) modifie l'angle de déviation desdits moyens de déviation optiques (3a, 4a).

3. Appareil selon la revendication 2, dans lequel ledit moyen de détection (5, 7) comprend un diviseur de faisceau (5) disposé dans le chemin optique entre lesdits moyens de déviation optiques (3a, 4a) et ladite surface (6) prédéterminée, et un capteur optique (7) pour capter le faisceau (2b) divisé par ledit diviseur de faisceau (5), à partir du faisceau (2a) dirigé sur ladite surface prédéterminée.

4. Appareil selon la revendication 3, dans lequel ledit capteur optique (7) détecte une position incidente du faisceau (2b) divisé par ledit diviseur de faisceau (5), et ledit moyen de commande (21, 22, 23) commandent la modification dudit angle de déviation sur la base de ladite position incidente détectée.

5. Appareil selon la revendication 4, dans lequel ledit capteur optique (7) présente un capteur à zone CCD.

6. Appareil selon la revendication 2, dans lequel ledit moyen de déviation optique (3a, 4a) présente un premier miroir (3a) et un deuxième miroir (4a).

7. Appareil selon la revendication 6, dans lequel ledit moyen de balayage (3, 4) comprend un premier moyen d'entraînement (3) pour faire tourner ledit premier miroir (3a) et un deuxième moyen d'entraînement (4) pour faire tourner ledit deuxième miroir (4a).

8. Appareil selon la revendication 7, dans lequel le faisceau lumineux (2) est balayé dans une première direction sur ladite surface (6) prédéterminée, par ledit premier miroir (3a) entraîné par ledit premier moyen (3), et le faisceau lumineux (2) est balayé dans une deuxième direction sur ladite direction sur ladite surface (6) prédéterminée, par ledit deuxième miroir (4a) entraîné par ledit deuxième moyen d'entraînement (4).

9. Appareil selon l'une des revendications précédentes, utilisé dans un appareil d'écriture d'information d'images, dans lequel ledit moyen de déviation optique (3a, 4a) guide un faisceau lumineux (2) vers une surface d'un objet devant être balayé, en vue d'y écrire une information d'images.

10. Appareil selon l'une des revendications précédentes, dans lequel ladite surface (6) prédéterminée consiste en un cristal liquide à teneur élevée en polymère, pour y écrire une information d'images.

11. Appareil selon la revendication 6, dans lequel chacun desdits premier et deuxième miroirs (3a, 4a) est un miroir planaire.
